# EUROPÄISCHE PATENTANMELDUNG

(11) **EP 3 037 229 A1**
(43) Veröffentlichungstag der Anmeldung: **29.06.2016**
(21) Anmeldenummer: 14199716.3
(22) Anmeldetag: 22.12.2014
(51) Int. Cl.: B28D 1/04, B28D 1/12

(54) **Bohrring für eine Kernbohrkrone**

(71) Anmelder: HILTI Aktiengesellschaft, 9494 Schaan (LI)
(72) Erfinder: Mueller, Matthias, 9470 Buchs (CH); Sonderegger, Marcel, 9435 Heerbrugg (CH)
(74) Vertreter: Hilti Aktiengesellschaft Corporate Intellectual Property

(57) **Zusammenfassung**

Bohrring (21) für eine zylinderförmige Kernbohrkrone, mit mindestens zwei Ringabschnitten (22.1, 23.1), die aus einem gesinterten Pulvergemisch (24, 26) und gesetzten Diamantpartikeln (25, 27) aufgebaut sind, wobei die Diamantpartikel (25, 27) in einer Ebene senkrecht zur Zylinderachse auf kreisförmigen Abtragbahnen (42, 43, 44, 45, 46, 47) angeordnet sind und die Ringabschnitte (22.1, 23.1) an den Seitenkanten miteinander verbunden sind.

## Beschreibung

### Technisches Gebiet

Die vorliegende Erfindung betrifft einen Bohrring für eine Kernbohrkrone gemäß dem Oberbegriff des Anspruchs 1.

### Stand der Technik

Bei Diamantwerkzeugen, die als Kernbohrkronen ausgebildet sind, wird zwischen Kernbohrkronen mit einem geschlossenen Bohrring und segmentierten Kernbohrkronen mit einzelnen Schneidsegmenten unterschieden. Kernbohrkronen bestehen aus einem Bearbeitungsabschnitt, einem zylinderförmigen Bohrschaft und einem Aufnahmeabschnitt mit Einsteckende. Die Kernbohrkrone wird über das Einsteckende in der Werkzeugaufnahme eines Kernbohrgerätes befestigt und im Bohrbetrieb vom Kernbohrgerät um eine Drehachse angetrieben.

Geschlossene Bohrringe werden aus einem Pulvergemisch mit statistisch verteilten Diamantpartikeln hergestellt. Das Pulvergemisch wird in eine Werkzeugform gefüllt und zu einem Grünteil gepresst; das Grünteil wird unter Temperatur- und Druckeinwirkung zu einem geschlossenen Bohrring gesintert. US 5,316,416 offenbart den Aufbau von geschlossenen Bohrringen, die über die gesamte Höhe des Bohrringes gute Abtrageigenschaften aufweisen. Die Bohrringe weisen mehrere obere Schlitze und untere Schlitze auf, die entlang der Umfangsrichtung der Bohrringe verteilt sind. Die oberen Schlitze erstrecken sich über die halbe Höhe der Bohrringe und münden in die dem Bohrschaft abgewandte Bearbeitungsfläche der Bohrringe. Die unteren Schlitze sind entlang der Umfangsrichtung der Bohrringe jeweils zwischen den oberen Schlitzen angeordnet und münden in die dem Bohrschaft zugewandte Anbindungsfläche der Bohrringe. Die oberen und unteren Schlitze überlappen sich in der Höhe der Bohrringe. Durch die Verteilung der oberen und unteren Schlitze über die gesamte Höhe der Bohrringe wird eine Kühl- und Spülflüssigkeit über die gesamte Einsatzzeit des Bohrringes an die Bearbeitungsstelle transportiert und abgetragenes Material wird aus dem Bohrbereich entfernt.

Bei der Herstellung von Schneidsegmenten für segmentierte Kernbohrkronen haben sich im Profibereich Verfahren etabliert, bei denen die Diamantpartikel in einem vorgegebenen Setzmuster angeordnet werden. Ein Grünteil wird schichtweise aus Pulverschichten, die ein Pulvergemisch enthalten, und Diamantschichten mit Diamantpartikeln, die in einem Setzmuster angeordnet sind, aufgebaut und anschließend unter Temperatur- und Druckeinwirkung zum Schneidsegment gesintert. Die Schneidsegmente werden entlang einer Umfangsrichtung des zylinderförmigen Bohrschaftes angeordnet und mit dem Bohrschaft verschweißt, verlötet und auf andere Weise befestigt. Die Schneidgeschwindigkeit, die mit einer segmentierten Kernbohrkrone erreichbar ist, hängt wesentlich von der Anordnung der Diamanten im Schneidsegment ab. Beim schichtweisen Aufbau kann die Anordnung der Diamantpartikel über die Anzahl an Diamantschichten, den Abstand zwischen den Diamantschichten und die Größe der Diamantpartikel beeinflusst werden.

### Darstellung der Erfindung

Die Aufgabe der vorliegenden Erfindung besteht darin, die Technologie der gesetzten Diamanten auf geschlossene Bohrringe anzuwenden und die Bearbeitungsqualität, die mit den so hergestellten Bohrringen erreichbar ist, zu erhöhen.

Diese Aufgabe wird bei dem eingangs genannten Bohrring erfindungsgemäß durch die Merkmale des unabhängigen Anspruchs 1 gelöst. Vorteilhafte Weiterbildungen sind in den abhängigen Ansprüchen angegeben.

Erfindungsgemäß ist vorgesehen, dass die Diamantpartikel in einer Ebene senkrecht zur Zylinderachse auf kreisförmigen Abtragbahnen angeordnet sind und die Ringabschnitte an den Seitenkanten miteinander verbunden sind. Der Bohrring ist aus mindestens zwei Ringabschnitten aufgebaut, die aus einem gesinterten Pulvergemisch und gesetzten Diamantpartikeln bestehen; die Ringabschnitte sind an den Seitenkanten kraft- oder stoffschlüssig miteinander verbunden.

Die Eigenschaften der Ringabschnitte können über das Pulvergemisch und die Diamantpartikel eingestellt werden. Die gesetzten Diamantpartikel sind auf kreisförmigen Abtragbahnen angeordnet; hintereinander angeordnete Diamantpartikel beschreiben bei der Bearbeitung die gleiche Abtragbahn. Für die Bearbeitung von armierten Betonwerkstoffen hat es sich als vorteilhaft erwiesen, wenn die kreisförmigen Abtragbahnen möglichst aneinander angrenzen.

In einer bevorzugten Ausführung umfasst der Bohrring eine Anzahl von n, n ≥ 1 ersten Ringabschnitten und n zweiten Ringabschnitten, wobei die ersten und zweiten Ringabschnitte entlang einer Umfangsrichtung des Bohrringes abwechselnd hintereinander angeordnet sind. Der Aufbau des Bohrringes aus ersten und zweiten Ringabschnitten ermöglicht die Anpassung an unterschiedliche zu bearbeitende Untergründe. Beim Kernbohren in Betonwerkstoffe mit eingebetteten Armierungseisen, die auch als armierte Betonwerkstoffe bezeichnet werden, trifft ein Bohrring beispielsweise auf unterschiedliche Untergründe in Form von Beton und Armierungseisen.

Besonders bevorzugt weisen die ersten Ringabschnitte auf der Außenseite einen diamantbesetzten Bereich auf und die zweiten Ringabschnitte weisen auf der Außenseite einen diamantlosen Bereich auf. Durch die abwechselnde Anordnung von diamantbesetzten Bereichen und diamantlosen Bereichen an der Außenseite des Bohrringes nimmt die Anzahl an Abtragbahnen, die die Diamantpartikel bei der Bearbeitung in der Ebene senkrecht zur Zylinderachse beschreiben, zu. Bei gleicher Anzahl an Diamantpartikeln kann mehr Material abgetragen werden und die Performance des Bohrringes verbessert sich.

Besonders bevorzugt sind die ersten Ringabschnitte aus einem gesinterten ersten Pulvergemisch und ersten Diamantpartikeln und die zweiten Ringabschnitte aus einem gesinterten zweiten Pulvergemisch und zweiten Diamantpartikeln aufgebaut. Die Eigenschaften der ersten Ringabschnitte können beispielsweise an den ersten Untergrund Beton angepasst werden und die Eigenschaften der zweiten Ringabschnitte an den zweiten Untergrund Armierungseisen. Die Eigenschaften der Ringabschnitte lassen sich beispielsweise über das Pulvergemisch und die Diamantpartikel einstellen. Bei den Diamantpartikeln können der mittlere Diamantdurchmesser, die Diamantverteilung und die Anzahl an Diamantpartikeln verändert werden.

Besonders bevorzugt stimmen das erste Pulvergemisch der ersten Ringabschnitte und das zweite Pulvergemisch der zweiten Ringabschnitte überein. Besonders bevorzugt weisen die ersten Diamantpartikel der ersten Ringabschnitte und die zweiten Diamantpartikel der zweiten Ringabschnitte die gleiche Diamantverteilung und den gleichen mittleren Diamantdurchmesser auf. Durch die Verwendung des gleichen Pulvergemisches und der gleichen Diamantpartikel kann der apparative Aufwand bei der Herstellung des Bohrringes reduziert werden; es werden nur ein Pulvergemisch und eine Sorte an Diamantpartikeln benötigt.

Besonders bevorzugt sind die ersten Diamantpartikel der ersten Ringabschnitte in der Ebene senkrecht zur Zylinderachse auf einer ersten Anzahl von ersten Abtragbahnen und die zweiten Diamantpartikel der zweiten Ringabschnitte auf einer zweiten Anzahl von zweiten Abtragbahnen angeordnet. Über die Anzahl an Abtragbahnen, die der Anzahl der Diamantschichten entspricht, kann die Anzahl an Diamantpartikeln verändert werden.

In einer bevorzugten Variante stimmen die erste Anzahl der ersten Abtragbahnen und die zweite Anzahl der zweiten Abtragbahnen überein. Durch die Verwendung des gleichen Pulvergemisches, der gleichen Diamantpartikel und der gleichen Anzahl an Diamantschichten kann der apparative Aufwand bei der Herstellung des Bohrringes reduziert werden; es wird nur eine Sorte an Grünteilen aufgebaut.

Besonders bevorzugt unterscheiden sich die ersten Krümmungsradien der ersten Abtragbahnen von den zweiten Krümmungsradien der zweiten Abtragbahnen. Unterschiedliche Krümmungsradien führen dazu, dass die Anzahl der Abtragbahnen zunimmt. Wenn alle Krümmungsradien verschieden sind, ergibt sich die Anzahl der Abtragbahnen des Bohrringes als Summe aus der ersten Anzahl der ersten Abtragbahnen und der zweiten Anzahl der zweiten Abtragbahnen.

Besonders bevorzugt sind die Anzahl an Abtragbahnen und die Größe der Diamantpartikel so eingestellt, dass der mittlere Diamantdurchmesser der Diamantpartikel mindestens 45 % vom Quotienten aus Bohrringbreite und Anzahl an Abtragbahnen beträgt. Für die Bearbeitung von armierten Betonwerkstoffen hat es sich als vorteilhaft erwiesen, wenn die kreisförmigen Abtragbahnen, die die Diamantpartikel bei der Bearbeitung beschreiben, möglichst aneinander angrenzen und die Armierungseisen nahezu vollständig von den Diamantpartikeln abgetragen werden.

Besonders bevorzugt ist zwischen den Ringabschnitten mindestens ein Wasserschlitz vorgesehen. Dabei beträgt die Höhe des mindestens einen Wasserschlitzes zwischen 1/3 und 5/6 der Gesamthöhe des Bohrringes. Bei Bohrringen, die mit dem Bohrschaft verschweißt werden, wird der Anbindungsbereich ohne Diamanten aufgebaut und ist für die Bearbeitung ungeeignet. Für die Bearbeitung von Untergründen eignet sich die mit Diamantpartikeln versehene Matrixzone, die ca. 5/6 der Gesamthöhe des Bohrringes darstellt.

Besonders bevorzugt wird die Höhe des mindestens einen Wasserschlitzes auf 2/3 der Gesamthöhe des Bohrringes eingestellt. Bei einem Anteil von 2/3 der Gesamthöhe kann eine ausreichende Festigkeit des fertigen Bohrringes sichergestellt werden. Während der Bearbeitung mit dem Bohrring muss Kühlflüssigkeit an die Bearbeitungsstelle transportiert werden; daher werden die Wasserschlitze im Bohrring so lang wie möglich ausgebildet.

Besonders bevorzugt weist mindestens ein Ringabschnitt eine Bohrung aufweist, die die Innen- und Außenseite des Bohrringes verbindet. Dabei ist die Bohrung besonders bevorzugt zumindest teilweise unterhalb des mindestens einen Wasserschlitzes angeordnet. Die zusätzliche Bohrung stellt eine ausreichende Kühlung des Bohrringes sicher, wenn der mindestens eine Wasserschlitz abgetragen ist.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine Kernbohrkrone bestehend aus einem Bohrring, einem zylinderförmigen Bohrschaft und einem Aufnahmeabschnitt;
- FIGN. 2A-C: eine erste Ausführungsform eines erfindungsgemäßen Bohrringes, der aus vier Ringabschnitten aufgebaut ist, in einer dreidimensionalen Darstellung (FIG. 2A), in einem Querschnitt senkrecht zur Drehachse (FIG. 2B) und in einer Detailvergrösserung (FIG. 2C);
- FIG. 3: eine zweite Ausführungsform eines erfindungsgemäßen Bohrringes, der aus vier Ringabschnitten mit Wasserschlitzen aufgebaut ist; und
- FIGN. 4A-D: die Herstellung des Bohrringes der FIG. 3 aus vier gleichen Grünteilen mit einer sechseckigen Grundfläche (FIG. 4A), wobei zwei Grünteile zu konkaven ersten Ringabschnitten und zwei Grünteile zu konvexen zweiten Ringabschnitten umgeformt werden (FIG. 4B), die ersten und zweiten Ringabschnitte entlang einer Umfangsrichtung abwechselnd hintereinander angeordnet werden (FIG. 4C) und unter Temperatur- und Druckeinwirkung zu einem geschlossenen Bohrring verbunden werden (FIG. 4D).

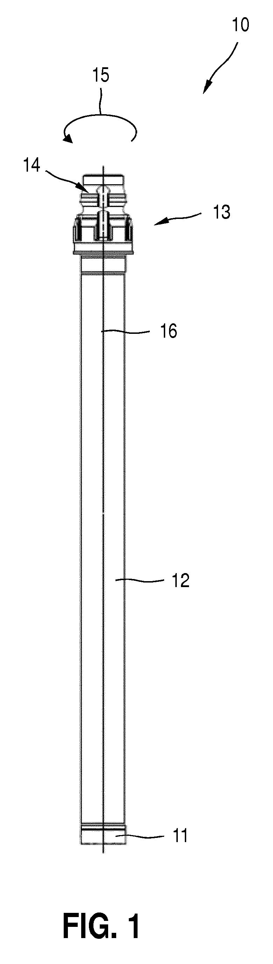

**FIG. 1** zeigt eine Kernbohrkrone **10** mit einem Bohrring **11**, einem zylinderförmigen Bohrschaft **12** und einem Aufnahmeabschnitt **13** mit Einsteckende **14**. Die Kernbohrkrone 10 wird über das Einsteckende 14 in der Werkzeugaufnahme eines Kernbohrgerätes befestigt und im Bohrbetrieb vom Kernbohrgerät in einer Drehrichtung **15** um eine Drehachse **16** angetrieben, wobei die Drehachse 16 koaxial zur Zylinderachse der Kernbohrkrone 10 verläuft.

Der Bohrring 11 ist mit dem Bohrschaft 12 verschweißt, verlötet, verschraubt oder in einer anderen geeigneten Befestigungsart am Bohrschaft 12 befestigt. Um den Bohrring 11 mit dem Bohrschaft 12 verschweißen zu können, muss der Verbindungsbereich zwischen Bohrring 11 und Bohrschaft 12 aus einem schweißbaren Material aufgebaut sein und darf keine Diamantpartikel enthalten, da Diamantpartikel nicht schweißbar sind.

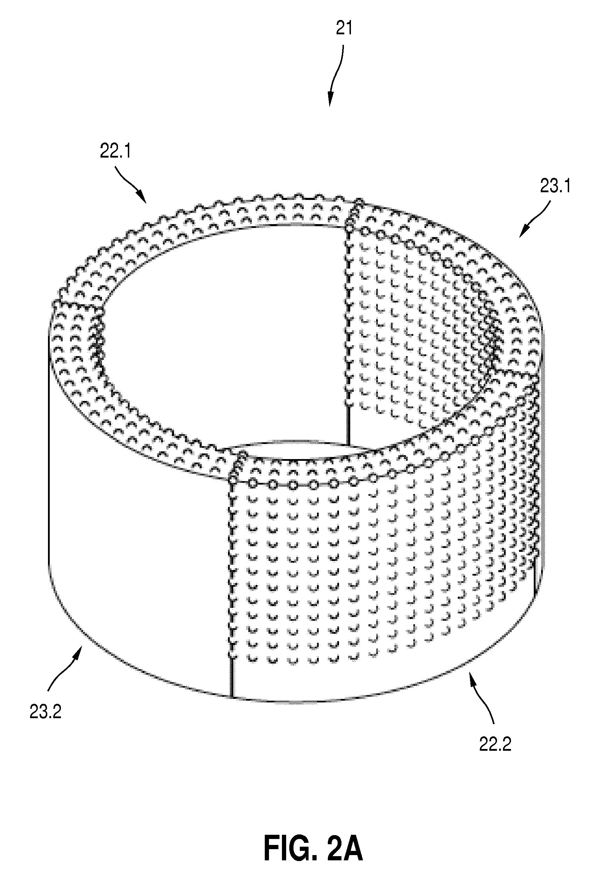

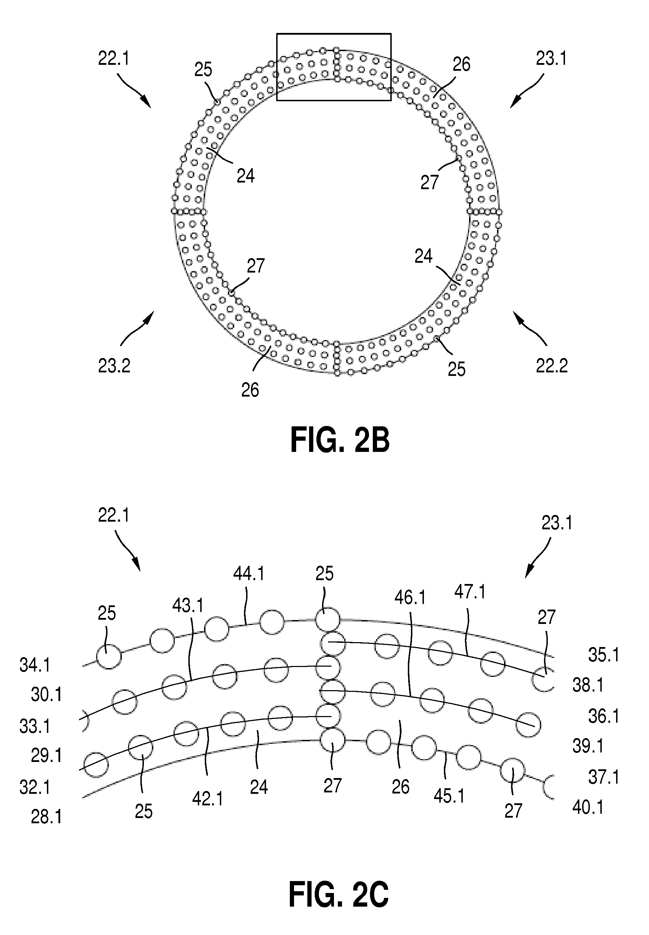

**FIGN. 2A-C** zeigen eine erste Ausführungsform eines erfindungsgemäßen Bohrringes **21**, der aus mehreren Ringabschnitten zusammengesetzt ist und den Bohrring 11 der Kernbohrkrone 10 der FIG. 1 ersetzen kann. Dabei zeigt FIG. 2A den Bohrring 21 in einer dreidimensionalen Darstellung, FIG. 2B den Bohrring 21 in einem Querschnitt senkrecht zur Drehachse 16 und FIG. 2C einen Ausschnitt aus dem Querschnitt der FIG. 2B im Verbindungsbereich zwischen zwei Ringabschnitten.

Der Bohrring 21 ist aus vier Ringabschnitten zusammengesetzt, die an den Seitenkanten miteinander verbunden sind und in Umfangsrichtung einen geschlossenen Ring bilden (FIG. 2A). Die Ringabschnitte des Bohrringes 21 lassen sich in zwei erste Ringabschnitte **22**.**1**, **22.2** und zwei zweite Ringabschnitte **23.1, 23.2** unterteilen, die entlang der Umfangsrichtung des Bohrringes 21 abwechselnd hintereinander angeordnet sind. Die ersten Ringabschnitte 22.1, 22.2 bestehen aus einem ersten Pulvergemisch **24** und ersten Diamantpartikeln **25** und die zweiten Ringabschnitte 23.1, 23.2 bestehen aus einem zweiten Pulvergemisch **26** und zweiten Diamantpartikeln **27** (FIG. 2B).

FIG. 2C zeigt einen Ausschnitt aus dem Querschnitt der FIG. 2B im Verbindungsbereich zwischen dem ersten Ringabschnitt 22.1 und dem zweiten Ringabschnitt 23.1. Der erste Ringabschnitt 22.1 ist aus einer Anzahl von **m₁** Pulverschichten des ersten Pulvergemisches 24 und m₁ Diamantschichten der ersten Diamantpartikel 25 aufgebaut. Der zweite Ringabschnitt 23.1 ist aus einer Anzahl von **m₂** Pulverschichten des zweiten Pulvergemisches 26 und m₂ Diamantschichten der zweiten Diamantpartikel 27 aufgebaut. Im Ausführungsbeispiel der FIG. 2 weisen der erste Ringabschnitt 22.1 m₁ = 3 Pulverschichten **28.1, 29.1, 30.1** und m₁ = 3 Diamantschichten **32.1, 33.1, 34.1** und der zweite Ringabschnitt 23.1 m₂ = 3 Pulverschichten **35.1, 36.1, 37.1** und m₂ = 3 Diamantschichten **38.1, 39.1, 40.1** auf.

Die ersten Diamantpartikel 25 der Diamantschichten 32.1-34.1 sind auf drei kreisförmigen ersten Abtragbahnen **42.1, 43.1, 44.1** mit unterschiedlichen ersten Krümmungsradien **R₁ᵢ,** i = 1, 2, 3 angeordnet. Die zweiten Diamantpartikel 27 der Diamantschichten 38.1-40.1 sind auf drei kreisförmigen zweiten Abtragbahnen **45.1, 46.1, 47.1** mit unterschiedlichen zweiten Krümmungsradien **R₂ᵢ,** i = 1, 2,3 angeordnet. Die Auswahl der Werkstoffe für das erste und zweite Pulvergemisch 24, 26, die Auswahl der Diamantverteilung und -größe für die ersten und zweiten Diamantpartikel 25, 27 und die Anzahl m₁, m₂ der Diamantschichten und Abtragbahnen ermöglichen die Anpassung des Bohrringes 21 an unterschiedliche zu bearbeitende Untergründe.

Die Ringabschnitte 22.1, 22.2, 23.1, 23.2 sind schichtweise aus drei Pulverschichten und drei Diamantschichten aufgebaut. Beim schichtweisen Aufbau wird das Pulvergemisch in eine Matrize gefüllt und bildet die erste Pulverschicht. Die Diamantpartikel werden in einem Setzmuster als erste Diamantschicht auf bzw. in die erste Pulverschicht platziert. Um den Schichtaufbau zu verdichten, kann nach dem Platzieren der Diamantpartikel eine Zwischenpressung erfolgen. Anschließend wird das Pulvergemisch in die Matrize gefüllt und bildet die zweite Pulverschicht. Die Diamantpartikel werden in einem Setzmuster als zweite Diamantschicht auf bzw. in die zweite Pulverschicht platziert. Dieser Vorgang wird solange wiederholt, bis die gewünschte Aufbauhöhe des Grünteils erreicht ist. Als letzte Schicht wird eine Diamantschicht verwendet.

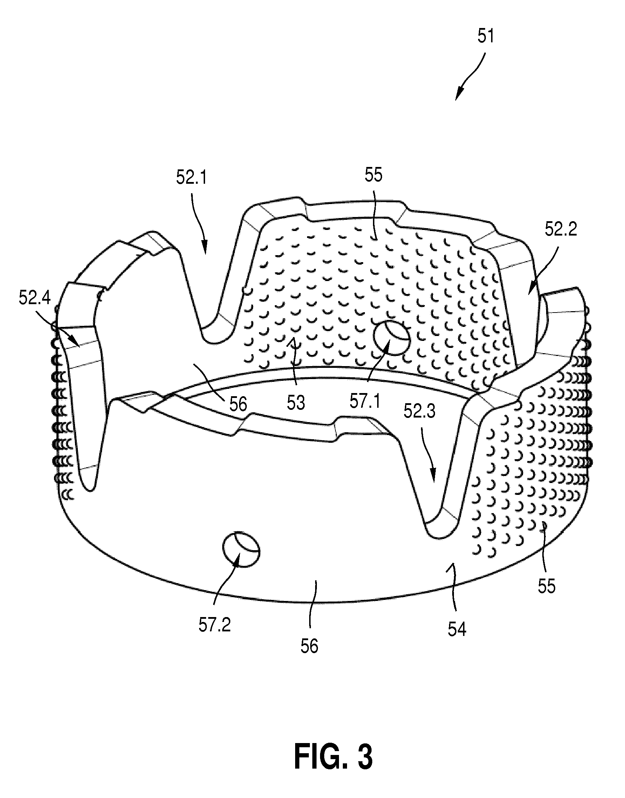

**FIG. 3** zeigt eine zweite Ausführungsform eines erfindungsgemäßen Bohrringes **51**, der aus vier Ringabschnitten besteht und den Bohrring 11 der Kernbohrkrone 10 ersetzen kann. Zwischen den Ringabschnitten sind vier Wasserschlitze **52.1, 52.2, 52.3, 52.4** ausgebildet, über die eine Kühlflüssigkeit an die Bearbeitungsstelle transportiert wird. Die Ringabschnitte sind so angeordnet, dass der Bohrring 51 an der Innenseite **53** und an der Außenseite **54** abwechselnd einen diamantbesetzten Bereich **55** und einen diamantlosen Bereich **56** aufweist.

Die Wasserschlitze 52.1-52.4 erstrecken sich über eine Höhe von ca. 2/3 der Gesamthöhe des Bohrringes 51. Um die Funktionsfähigkeit des Bohrringes 51 sicherzustellen, wenn die Wasserschlitze 52.1-52.4 abgetragen sind, weisen zwei Ringabschnitte eine Bohrung **57.1, 57.2** auf, über die Kühlflüssigkeit an die Bearbeitungsstelle transportiert wird.

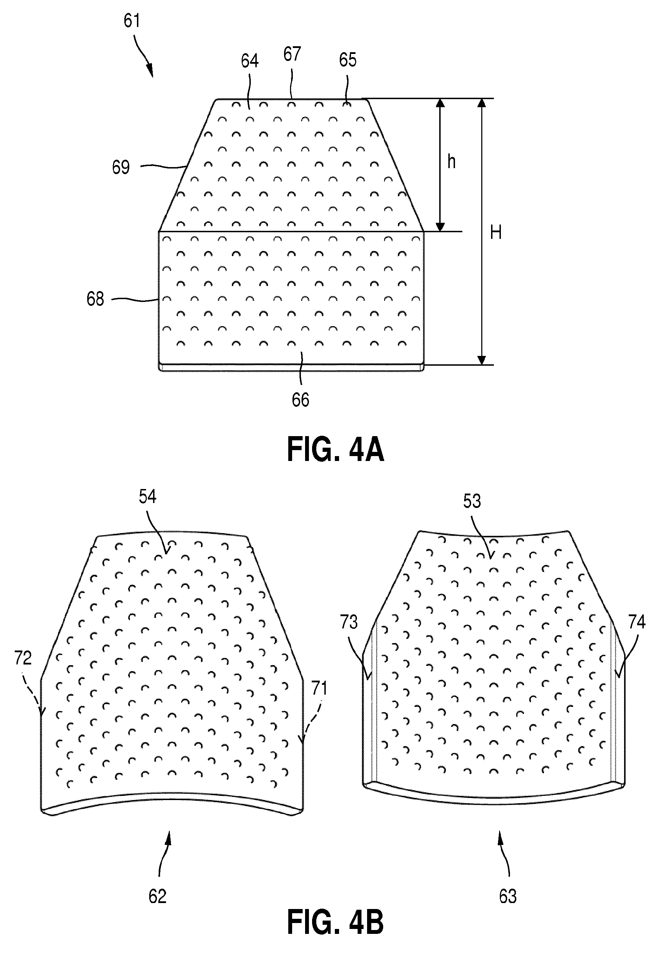

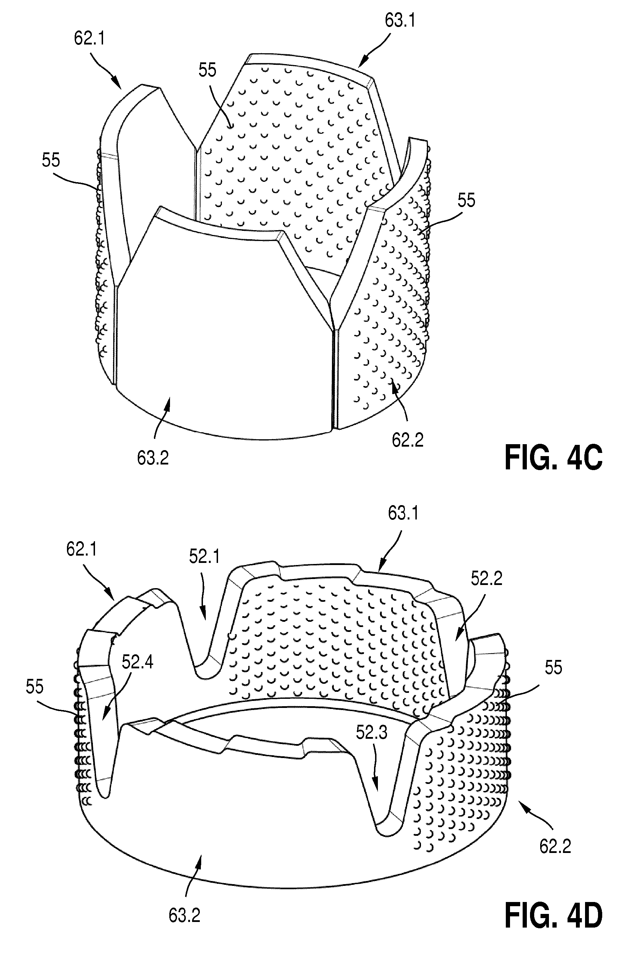

**FIGN. 4A-D** zeigen die Herstellung des Bohrringes 51 aus vier gleichen Grünteilen **61** mit einer sechseckigen Grundfläche (FIG. 4A). Zwei Grünteile 61 werden zu konkaven ersten Ringabschnitten **62** und zwei Grünteile 61 zu konvexen zweiten Ringabschnitten **63** umgeformt (FIG. 4B). Die ersten und zweiten Ringabschnitte 62, 63 werden entlang einer Umfangsrichtung des Bohrringes 51 abwechselnd hintereinander angeordnet (FIG. 4C) und unter Temperatur- und Druckeinwirkung zu einem geschlossenen Bohrring gesintert (FIG. 4D).

FIG. 4A zeigt den Aufbau des Grünteils 61, das schichtweise aus Pulverschichten eines Pulvergemisches **64** und Diamantschichten von Diamantpartikeln **65** hergestellt wurde. Das Grünteil 61 besteht aus einem Anbindungsbereich **66**, der auch als Fußzone bezeichnet wird, und einem Bearbeitungsbereich **67**, der auch als Matrixzone bezeichnet wird. Der Anbindungsbereich 66 und der Bearbeitungsbereich 67 können gemeinsam schichtweise aufgebaut werden, wobei im Anbindungsbereich keine Diamantpartikel 65 gesetzt werden. Alternativ kann der Anbindungsbereich als separater Bereich hergestellt und beim Sintern mit dem Bearbeitungsbereich verbunden werden.

Die Grundfläche der Grünteile 61 ist sechseckig ausgebildet und besteht aus einem Rechteck **68** und einem angrenzenden gleichschenkligen Trapez **69,** wobei sich der Anbindungsbereich 66 des Grünteils 61 im Rechteck 68 befindet. Im Bereich der Trapezschenkel werden beim Sintern durch zusätzliche Druckeinwirkung die Wasserschlitze 52.1-52.4 ausgebildet, über die Kühlflüssigkeit an die Bearbeitungsstelle transportiert wird. Die Höhe **h** des Trapezes 69 im Grünteil legt die Höhe der Wasserschlitze 52.1-52.4 fest. Im Ausführungsbeispiel entspricht die Höhe h des Trapezes 69 der halben Gesamthöhe **H** des Grünteils.

FIG. 4B zeigt den ersten Ringabschnitt 62, der aus dem Grünteil 61 der FIG. 4A unter Druckeinwirkung mit einer konvexen Krümmung erzeugt wurde, und den zweiten Ringabschnitt 63, der aus dem Grünteil 61 der FIG. 4A unter Druckeinwirkung mit einer konkaven Krümmung erzeugt wurde. Beim ersten Ringabschnitt 62 ist die Oberseite des Grünteils 61, die als Diamantschicht ausgebildet ist, auf der Außenseite 54 und beim zweiten Ringabschnitt 63 ist die Oberseite des Grünteils 61 auf der Innenseite 53 angeordnet.

Der erste Ringabschnitt 62 weist eine erste und zweite Seitenkante **71, 72** auf, die beim Sintern mit einer ersten und zweiten Seitenkante **73, 74** des zweiten Ringabschnittes 63 verbunden werden. Dabei werden die erste Seitenkante 71 des ersten Ringabschnittes 62 mit der zweiten Seitenkante 74 des zweiten Ringabschnittes 63 und die zweite Seitenkante 72 des ersten Ringabschnittes 62 mit der ersten Seitenkante 73 des zweiten Ringabschnittes 63 verbunden. Beim Bohrring 51 mit zwei ersten und zweiten Ringabschnitten 62.1, 62.2, 63.1, 63.2 werden jeweils die ersten und zweiten Seitenkanten der benachbarten Ringabschnitte miteinander verbunden.

FIG. 4C zeigt die ersten Ringabschnitte 62.1, 62.2 und zweiten Ringabschnitte 63.1, 63.2, die entlang einer Umfangsrichtung des Bohrringes 51 abwechselnd hintereinander angeordnet sind. Die Ringabschnitte 62.1, 63.1, 62.2, 63.2 bilden einen geschlossenen Bohrring und werden in der in FIG. 4C gezeigten Anordnung in einer Heißpresse weiter bearbeitet. FIG. 4D zeigt den geschlossenen Bohrring nach dem Heißpressen. Beim Heißpressen werden die Ringabschnitte 62.1, 63.1, 62.2, 63.2 einer Temperatur- und Druckeinwirkung unterzogen. Die Temperatureinwirkung sorgt dafür, dass das Pulvergemisch in den Ringabschnitten gesintert wird und die Ringabschnitte an den Seitenkanten miteinander verbunden werden. Durch Druckeinwirkung in axialer Richtung, d.h. parallel zur Drehachse des Bohrringes, erfolgt eine Kompression der Ringabschnitte, die zu einer Verdichtung der Ringabschnitte führt. Das Heißpressen erfolgt in einer Matrize, die die endgültige Form des Bohrringes festlegt.

## Patentansprüche

1. Bohrung (21; 51) für eine zylinderförmige Kernbohrkrone (10), mit mindestens zwei Ringabschnitten (22.1, 22.2, 23.1, 23.2; 62.1, 62.2, 63.1, 63.2), die aus einem gesinterten Pulvergemisch (24, 26; 64) und gesetzten Diamantpartikeln (25, 27; 65) aufgebaut sind, **dadurch gekennzeichnet, dass** die Diamantpartikel (25, 27; 65) in einer Ebene senkrecht zur Zylinderachse auf kreisförmigen Abtragbahnen (42, 43, 44, 45, 46, 47) angeordnet sind und die Ringabschnitte (22.1, 22.2, 23.1, 23.2; 62.1, 62.2, 63.1, 63.2) an den Seitenkanten (71, 72, 73, 74) miteinander verbunden sind.

2. Bohrring nach Anspruch 1, **dadurch gekennzeichnet, dass** der Bohrring eine Anzahl von n, n ≥ 1 ersten Ringabschnitten (22.1, 22.2; 62.1, 62.2) und n zweiten Ringabschnitten (23.1, 23.2; 63.1, 63.2) umfasst, wobei die ersten und zweiten Ringabschnitte (22.1, 22.2, 23.1, 23.2; 62.1, 62.2, 63.1, 63.2) entlang einer Umfangsrichtung des Bohrringes (21; 51) abwechselnd hintereinander angeordnet sind.

3. Bohrring nach Anspruch 2, **dadurch gekennzeichnet, dass** die ersten Ringabschnitte (22.1, 22.2) einen diamantbesetzten Bereich (55) und die zweiten Ringabschnitte (23.1, 23.2) einen diamantlosen Bereich (56) auf der Außenseite (54) aufweisen.

4. Bohrring nach einem der Ansprüche 2 bis 3, **dadurch gekennzeichnet, dass** die ersten Ringabschnitte (22.1, 22.2) aus einem gesinterten ersten Pulvergemisch (24) und ersten Diamantpartikeln (25) aufgebaut sind und die zweiten Ringabschnitte (23.1, 23.2) aus einem gesinterten zweiten Pulvergemisch (26) und zweiten Diamantpartikeln (27) aufgebaut sind.

5. Bohrring nach Anspruch 4, **dadurch gekennzeichnet, dass** das erste Pulvergemisch (24) der ersten Ringabschnitte (22.1, 22.2) und das zweite Pulvergemisch (26) der zweiten Ringabschnitte (23.1, 23.2) übereinstimmen.

6. Bohrring nach einem der Ansprüche 4 bis 5, **dadurch gekennzeichnet, dass** die ersten Diamantpartikel (25) der ersten Ringabschnitte (22.1, 22.2) und die zweiten Diamantpartikel (27) der zweiten Ringabschnitte (23.1, 23.2) die gleiche Diamantverteilung und den gleichen mittleren Diamantdurchmesser aufweisen.

7. Bohrring nach einem der Ansprüche 4 bis 6, **dadurch gekennzeichnet, dass** die ersten Diamantpartikel (25) der ersten Ringabschnitte (22.1, 22.2) in der Ebene senkrecht zur Zylinderachse auf einer ersten Anzahl (m₁) von ersten Abtragbahnen (42, 43, 44) und die zweiten Diamantpartikel (27) der zweiten Ringabschnitte (23.1, 23.2) auf einer zweiten Anzahl (m₂) von zweiten Abtragbahnen (45, 46, 47) angeordnet sind.

8. Bohrring nach Anspruch 7, **dadurch gekennzeichnet, dass** die erste Anzahl (m₁) der ersten Abtragbahnen (42, 43, 44) und die zweite Anzahl (m₂) der zweiten Abtragbahnen (45, 46, 47) übereinstimmen.

9. Bohrring nach einem der Ansprüche 7 bis 8, **dadurch gekennzeichnet, dass** sich die ersten Krümmungsradien (R₁ᵢ) der ersten Abtragbahnen (42, 43, 44) von den zweiten Krümmungsradien (R₂ᵢ) der zweiten Abtragbahnen (45, 46, 47) unterscheiden.

10. Bohrring nach Anspruch 9, **dadurch gekennzeichnet, dass** die Anzahl der Abtragbahnen (m₁, m₂) und die Größe der Diamantpartikel (25, 27; 65) so eingestellt sind, dass der mittlere Diamantdurchmesser der Diamantpartikel (25, 27; 65) mindestens 45 % vom Quotienten aus Breite des Bohrringes (21; 51) und Anzahl der Diamantschichten (m₁, m₂) beträgt.

11. Bohrring nach einem der Ansprüche 1 bis 10, **dadurch gekennzeichnet, dass** zwischen den Ringabschnitten (62.1, 62.2, 63.1, 63.2) mindestens ein Wasserschlitz (52.1, 52.2, 52.3, 52.4) vorgesehen ist.

12. Bohrring nach Anspruch 11, **dadurch gekennzeichnet, dass** die Höhe des mindestens einen Wasserschlitzes (52.1, 52.2, 52.3, 52.4) zwischen 1/3 und 5/6 der Gesamthöhe des Bohrringes (51) beträgt.

13. Bohrring nach einem der Ansprüche 11 bis 12, **dadurch gekennzeichnet, dass** mindestens ein Ringabschnitt (63.1, 63.2) eine Bohrung (57.1, 57.2) aufweist, die die Innen- und Außenseite (53, 54) des Bohrringes (51) verbindet.
